# EUROPÄISCHE PATENTSCHRIFT

(11) **EP 3 165 301 B1**
(45) Veröffentlichungstag und Bekanntmachung des Hinweises auf die Patenterteilung: **30.12.2020**
(21) Anmeldenummer: 15193431.2
(22) Anmeldetag: 06.11.2015
(51) Int. Cl.: B21F 27/10, B23K 11/00, B23K 11/30, F15B 11/02, F15B 11/036

(54) **GITTERSCHWEISSANLAGE**
GRID WELDING SYSTEM
INSTALLATION DE SOUDAGE DE TREILLIS

(43) Veröffentlichungstag der Anmeldung: 10.05.2017
(73) Patentinhaber: Schlatter Industries AG, 8952 Schlieren (CH)
(72) Erfinder: Siegrist, Roger, 5524 Niederwil (CH)
(74) Vertreter: Keller Schneider Patent- und Markenanwälte AG (Bern)

(56) Entgegenhaltungen:
- EP-A1- 1 398 105
- GB-A- 1 151 775
- US-A- 3 288 036
- US-B1- 6 241 142

## Beschreibung

### Technisches Gebiet

Die Erfindung betrifft eine Gitterschweissanlage mit einer Anpressvorrichtung für mindestens ein Werkzeug der Gitterschweissanlage. Die Anpressvorrichtung umfasst ein erstes Pneumatikelement mit mindestens einer ersten Kolbenstange, welche so ausgestaltet ist, dass sie mit einem der Werkzeuge der Gitterschweissanlage in Wirkverbindung gebracht werden kann (siehe z.B. US 6 241 142 B1). Ferner betrifft die Erfindung ein Verfahren zum Schweissen von Gitterstäben sowie einen Bausatz zur Aufrüstung einer Gitterschweissanlage.

### Stand der Technik

Eine Gitterschweissanlage verschweisst Längs- und Querstäbe zu einem Gitter. Beim Schweissen werden die zu verschweissenden Gitterdrähte zusammengepresst und mit einem definierten Strom erhitzt, welcher über die zu verschweissende Verbindungsstelle der Gitterdrähte fliesst.

Durch das gleichzeitige Einwirken der Temperatur und der Anpresskraft werden die Gitterstäbe stoffschlüssig miteinander verbunden. Die optimale Anpresskraft für den Schweissvorgang ist dabei abhängig von den Gitterdrahtdurchmessern und der Materialbeschaffenheit der zu verschweissenden Gitterdrähte. Zudem ist es von Vorteil, wenn die Kraftquelle während des Prozesses nachsetzen kann, um die Anpresskraft während der Prozessdauer aufrechterhalten zu können. Üblicherweise werden Pneumatikpressen zum Verpressen der Gitterstäbe verwendet, für höhere Kraftbereiche jedoch auch Hydraulikpressen. Die Pneumatik- und die Hydraulikpressen ermöglichen es einerseits die Anpresskraft während des gesamten Prozesses aufrechtzuerhalten, andererseits die Anpresskraft an den Drahtdurchmesser anzupassen.

Soweit es der erforderliche Kraftbereich zulässt, werden daher Pneumatikpressen eingesetzt. Allerdings ist der Kraftbereich einer üblichen Pneumatikpresse begrenzt, denn Pneumatikpressen, welche für hohe Kräfte geeignet sind, bewegen sich bei kleinen Anpresskräften nicht mehr schnell und zuverlässig. Daher müssen die Pneumatikpressen bei einem Wechsel von einem Gitterdrahtdurchmesser auf einen anderen häufig umgerüstet werden, was einen hohen Zeit- und Arbeitsaufwand bedeutet. Die Hydraulikpressen erlauben das Aufbringen hoher Anpresskräfte und die Abdeckung grosser Kraftbereiche. Jedoch ist der Einsatz von Hydraulikpressen sehr aufwendig und auch mit Schmutz durch Ölleckagen verbunden.

### Darstellung der Erfindung

Aufgabe der Erfindung ist es, eine dem eingangs genannten technischen Gebiet zugehörende Gitterschweissanlage zu schaffen, welche mindestens einen Nachteil des Bekannten überwindet und es insbesondere ermöglicht, in einem grossen Kraftbereich kosteneffizient Gitterstäbe verschweissen zu können.

Die Lösung der Aufgabe ist durch die kennzeichnenden Merkmale der unabhängigen Ansprüche definiert. Gemäss der Erfindung umfasst die Gitterschweissanlage eine Anpressvorrichtung für mindestens ein Werkzeug der Gitterschweissanlage. Dabei umfasst die Anpressvorrichtung ein erstes Pneumatikelement mit mindestens einer ersten Kolbenstange, welche so ausgestaltet ist, dass sie mit einem der Werkzeuge der Gitterschweissanlage in Wirkverbindung gebracht werden kann. Die Anpressvorrichtung umfasst ferner ein zweites Pneumatikelement mit mindestens einer zweiten Kolbenstange, welche so ausgestaltet ist, dass sie mit dem ersten Pneumatikelement, insbesondere mit der ersten Kolbenstange in Wirkverbindung gebracht werden kann. Dabei sind das erste und das zweite Pneumatikelement so angeordnet, dass die erste(n) und zweite(n) Kolbenstange(n) durch eine translatorische Bewegung in ihrer Längsrichtung (Z) eine gemeinsame Anpresskraft ausüben können.

Durch die Erfindung kann ein grösserer Kraftbereich mit derselben Anpressvorrichtung abgedeckt werden. Es kann ein grösserer Durchmesserbereich an Gitterdrähten auf der Gitterschweissanlage verschweisst werden, ohne dass umgerüstet werden muss. Es kann dadurch sowohl die Anpresskraft nur von dem ersten Pneumatikelement aufgebracht werden oder gleichzeitig vom ersten und vom zweiten Pneumatikelement. In einem unteren Kraftbereich kann die Anpresskraft nur von dem ersten Pneumatikelement aufgebracht werden und die Wirkverbindung zwischen der (den) ersten Kolbenstange(n) und der (den) zweiten Kolbenstange(n) unterbrochen sein. In diesem Fall wirkt die Reibung des zweiten Pneumatikelements beim Anpressen nicht der Anpresskraft entgegen bzw. bei einer Abhebebewegung in entgegengesetzter Richtung nicht der Abhebebewegung entgegen bzw. nicht auf eine translatorische Bewegung der erste(n) Kolbenstange(n) des ersten Pneumatikelements zurück.

Dadurch lässt sich die Anpressvorrichtung auch mit geringen Anpresskräften betreiben und damit die Gitterschweissanlage wesentlich flexibler und kostengünstiger einsetzen. Zudem muss in einem unteren Kraftbereich eine geringere Masse bewegt werden, so dass kleinere Kraftspitzen beim Aufsetzen der Anpressvorrichtung auf den zu verschweissenden Gitterstäben entstehen. Die Anpressvorrichtung kann zudem durch die geringere bewegte Masse schneller arbeiten. Gleichzeitig kann der Luftverbrauch im unteren Kraftbereich gesenkt werden.

Es ist auch möglich, dass eine Anordnung aus einem ersten- und einem zweiten Pneumatikelement mit mehreren Werkzeugen eine Wirkverbindung herstellen kann. Beispielsweise können mehrere Elektroden bezüglich einer translatorischen Bewegung in ihrer Längsachse mit der (den) ersten Kolbenstange(n) wirkverbunden sein. Durch diese Anordnung lassen sich insbesondere engmaschige Gitter verschweissen.

Ein erstes/zweites Pneumatikelement kann mehrere parallel zueinander angeordnete Pneumatikzylinder mit jeweils einer erster/zweiten Kolbenstange umfassen, an welcher jeweils ein Kolben angeordnet ist.

In einer besonderen Ausführungsform sind die Pneumatikzylinder des ersten und/oder zweiten Pneumatikelements als Duplexzylinder mit einem Duplexkolben ausgebildet. Ein Duplexzylinder ist in zwei in Richtung der Längsachse der Kolbenstange hintereinander liegende Teilzylinder unterteilt. Ein Duplexkolben umfasst dabei zwei über die Kolbenstange verbundene Kolben die jeweils in einem Teilzylinder angeordnet sind.

In einer weiteren besonderen Ausführungsform sind die Pneumatikzylinder des ersten und des zweiten Pneumatikelements als Triplexzylinder mit einem Triplexkolben ausgebildet.

Gemäss der Erfindung sind die Pneumatikelemente so ausgestaltet, dass sie getrennt voneinander steuerbar sind. Dabei sind sie so ausgestaltet, dass das erste Pneumatikelement eine erste Steuereinrichtung umfasst und das zweite Pneumatikelement eine zweite Steuereinrichtung umfasst, welche jeweils separat ansteuerbar sind. Durch die getrennte Ansteuerung können die Pneumatikelemente separat dazugeschaltet werden. Sie können dazugeschaltet werden, wenn dazu Bedarf besteht.

Dadurch, dass beide Pneumatikelemente separat dazugeschaltet werden können, kann ohne einen Umrüstvorgang der Anpresskraftbereich der Anpressvorrichtung vergrössert oder verkleinert werden. Es kann dabei automatisch der Anpresskraftbereich auf andere Werkstücke und/oder Prozessparameter umgestellt oder auch während der Bearbeitung umgestellt werden.

In einer besonderen Ausführungsform weist mindestens eine erste oder eine zweite Kolbenstange eine Kontaktstelle zur Herstellung einer Kontaktverbindung auf, welche ausgelegt ist um die mindestens eine erste Kolbenstange in Wirkverbindung mit einer zweiten Kolbenstange zu bringen. Insbesondere ist die Kontaktstelle aus Messing.

Durch die Kontaktstelle ist es einfach möglich, eine Wirkverbindung zwischen der ersten und der zweiten Kolbenstange in Form einer Kontaktverbindung herzustellen und dadurch eine Anpresskraft von der zweiten Kolbenstange auf die erste Kolbenstange zu übertragen, wenn Bedarf dazu besteht, oder zu trennen, wenn kein Bedarf dazu besteht. Es ist kein zusätzlicher Mechanismus zum Herstellung oder zum Trennen der Kontaktverbindung notwendig.

In einer besonderen Ausführungsform weisen alle ersten oder zweiten Kolbenstangen eine Kontaktstelle zur Herstellung eine Kontaktverbindung auf.

Alternativ kann anstelle der Kontaktverbindung auch eine feste Verbindung zwischen der (den) ersten und der (den) zweiten Kolbenstange(n) hergestellt werden. Beispielsweise kann eine lösbare kraftschlüssige Verbindung angewendet werden, wie beispielsweise eine Klemmverbindung. Es ist aber auch genauso möglich, formschlüssige Verbindungen, beispielsweise über einen Bolzen oder eine Schnappverbindung zu realisieren. In diesen Fällen muss jedoch jeweils die Verbindung zwischen der ersten und der zweiten Kolbenstange beim Herstellen und/oder Trennen der Wirkverbindung aktiv hergestellt oder gelöst werden, beispielsweise durch einen manuellen Eingriff oder auch durch ein automatisiertes mechanisches bzw. mechatronisches Betätigungsmittel.

Es können jedoch auch andere Kraftübertragungsmechanismen in Frage kommen. Beispielsweise kann eine Verbindung über eine magnetische oder elektromagnetische Kraft erfolgen. Es sind selbstverständlich auch Mischformen der zuvor genannten Verbindungsformen möglich.

Die Verwendung einer Kontaktstelle aus Messing ist besonders vorteilhaft, da Messing verschleissresistent und gleichzeitig relativ weich ist und dadurch der Stoss bei der Herstellung der Kontaktverbindung klein gehalten werden kann. Dadurch dass die Kontaktstelle an der (den) ersten oder zweiten Kolbenstange(n) im Vergleich zu den Kolbenstangen, die üblicherweise aus Stahl hergestellt sind, weich ist, kann der Verschleiss an der zweiten oder ersten Kolbenstange, welche mit der jeweiligen ersten oder zweiten Kolbenstange in Wirkverbindung gebracht werden kann, ebenfalls reduziert werden.

In einer bevorzugten Ausführungsform ist die Kontaktstelle austauschbar, so dass die Lebensdauer der Anpressvorrichtung erhöht oder auch an das Schweissgut angepasst werden kann.

Es sind jedoch auch Kontaktstellen aus anderen Materialen möglich, insbesondere Materialen, die dämpfend sind und somit einen Stoss verringern, die aber auf der anderen Seite robust gegen Verschleiss sind. Es eignen sich neben Messing-Verbindungen auch andere Kupfer-Legierungen. Es können neben metallischen Werkstoffen auch Kunststoffe oder Keramiken verwenden werden. Insbesondere sind auch Kontaktstellen möglich, welche aus mehreren Materialen bestehen, wie beispielsweise aus Verbundwerkstoffen. Es können auch beide Kolbenstangen mit Kontaktstellen zum Herstellen einer Kontaktverbindung ausgestattet sein.

In einer besonderen Ausführungsform sind die erste(n) und zweite(n) Kolbenstange(n) in Serie angeordnet.

Durch die Anordnung in Serie, ergibt sich die Anpresskraft direkt aus der Summe der einzelnen Kräfte der Pneumatikelemente. Die Anpresskraft des zweiten Pneumatikelements wird dadurch immer über das erste Pneumatikelement auf das Werkstück übertragen. Dadurch ist eine Nachrüstung bestehender Maschinen einfach möglich, da die Schnittstelle zum Werkzeug bei einer Nachrüstung beibehalten werden kann.

Insbesondere werden die erste(n) und zweite(n) Kolbenstange(n) auch geometrisch hintereinander in Serie angeordnet. Dadurch werden Kippmomente vermieden, welche sich beispielsweise bei einer quer zur Längsrichtung versetzten Anordnung ergeben können. Die Baubreite der Anpressvorrichtung bei einer vorgegebenen Anpresskraft kann durch die Anordnung in Serie klein gehalten werden, wodurch auch engmaschige Gitter geschweisst werden können. Zudem können auch ähnliche Komponenten für das erste und das zweite Pneumatikelement verwendet werden, wodurch die Kosten klein gehalten werden können.

Alternativ lassen sich die erste(n) und zweite(n) Kolbenstange(n) in einer Serie anordnen, wobei jedoch die Kolbenstangen quer zur Längsrichtung (Z) zueinander versetzt sind.

In einer weiteren alternativen Ausführungsform sind die erste(n) und zweite(n) Kolbenstange(n) parallel zueinander angeordnet, das heisst, das sowohl die erste(n) und die zweite(n) Kolbenstange(n) eine Anpresskraft auf das Werkzeug auszuüben vermögen, ohne dass jedoch der Kraftfluss der zweiten Kolbenstange(n) über die erste(n) Kolbenstange(n) geht.

In einer besonderen Ausführungsform ist das Werkzeug eine Elektrode, welche insbesondere bezüglich einer translatorischen Bewegung in ihrer Längsachse mit der (den) ersten Kolbenstange(n) wirkverbunden ist.

Dadurch, dass das Werkzeug eine Elektrode ist, welche mit der ersten Kolbenstange wirkverbunden ist, kann die Elektrode sehr schnell angepresst und wieder zurückgezogen werden, wodurch eine sehr schnelle Bearbeitung, insbesondere eine sehr schnelle diskontinuierliche Bearbeitung möglich ist, wie das beim Schweissen von Gitterstäben der Fall ist. Insbesondere können die Anpresskräfte der Elektrode direkt und damit genau aufgebracht werden. Das Werkzeug kann auch eine Strombrücke umfassen, an deren Ende Elektroden angeordnet sind, wodurch serielles Schweissen möglich wird.

In einer alternativen Ausführungsform ist das Werkzeug ein Anpressmittel, welches die zu verschweissenden Gitterdrähte aneinanderpresst, wie beispielsweise eine Rolle.

In einer besonderen Ausführungsform weist das zweite Pneumatikelement ein Rückhaltemittel auf, welches ausgestaltet ist, eine Rückstellkraft auf die zweite(n) Kolbenstange(n) auszuüben. Insbesondere umfasst das zweite Pneumatikelement mindestens eine Rückstellfeder, welche so ausgestaltet ist, dass sie auf die zweite(n) Kolbenstangen eine Rückstellkraft ausübt, welche translatorisch zur Längsachse der zweite(n) Kolbenstange(n) wirkt.

Die Rückstellkraft des Rückstellelements wirkt in Längsrichtung (Z) der Anpresskraft entgegen und vermag das zweite Pneumatikelement bzw. die zweite Kolbenstange in einer Ruheposition halten oder gar in diese zurückzuziehen.

Dadurch muss auch dann keine Druckluft aufgewendet werden, um das zweite Pneumatikelement in der Ruheposition zu halten, wenn das zweite Pneumatikelement vertikal über dem ersten Pneumatikelement angeordnet ist.

Das erste Pneumatikelement kann auch dann völlig unabhängig vom ersten Pneumatikelement betrieben werden.

In einer besonderen Ausführungsform ist das Rückstellelement ein elektromagnetisches Stellelement.

In einer weiteren besonderen Ausführungsform ist das Rückstellelement ein Permanentmagnet.

Alternativ kann das zweite Pneumatikelement jedoch auch als Zweiwegpneumatikelement ausgeführt sein, so dass die zweite(n) Kolbenstange(n) in Längsrichtung (Z) entgegen der Richtung der Anpresskraft über Druckluft in der Ruheposition gehalten bzw. bewegt werden kann.

In einer weiteren Alternativen Ausführungsform umfasst das zweite Pneumatikelement kein Rückstellelement.

In einer besonderen Ausführungsform umfassen das erste und das zweite Pneumatikelement zum schnellen Aufbau der Anpresskraft jeweils wenigstens ein Vorschubventil, welches die Betätigung der ersten und der zweiten Kolbenstange(n) in Längsrichtung (Z) in Richtung der Anpresskraft ermöglicht. Als Vorschubventil wird im Rahmen der Erfindung eines Pneumatikelements bezeichnet, durch welches Druckluft in die Luftkammern des Pneumatikelements eingelassen werden kann, in welchen ein Überdruck ein Ausfahren der Kolbenstange(n) in Richtung der zu verschweissenden Gitterstäbe bewirkt oder eine Erhöhung des Anpressdrucks bzw. Anpresskraft bewirkt. Dadurch, dass das erste und das zweite Pneumatikelement jeweils ein Vorschubventil umfasst, kann die Druckluft schneller eingelassen werden als mit einem gemeinsamen Vorschubventil. Vorzugsweise umfassen beide Vorschubventile jeweils einen Entlüftungsanschluss, wodurch der Anpressdruck bzw. die Anpresskräfte auch schneller abgebaut werden können.

Als Vorschubventile mit Entlüftunganschluss können beispielsweise 3/2-Wegeventile verwendet werden.

Da das erste und das zweite Pneumatikelement ein eigenes Vorschubventil umfassen, können sie auch separat angesteuert werden.

Alternativ werden das erste und das zweite Pneumatikelement von einem gemeinsamen Vorschubventil angesteuert.

In einer besonderen Ausführungsform umfasst das erste Pneumatikelement wenigstens ein Rückzugventil, dass eine Betätigung der erste(n) Kolbenstange(n) in Längsrichtung (Z) in eine der Anpresskraft entgegengesetzten Richtung ermöglicht. Als ein Rückzugventil wird im Rahmen der Erfindung ein Pneumatikventil bezeichnet, durch welches Druckluft in die Luftkammern des Pneumatikelements eingelassen werden kann, in welchen ein Überdruck ein Einfahren der Kolbenstange(n) von den zu verschweissenden Gitterstäbe weg oder eine Verringerung des Anpressdrucks bzw. Anpresskraft bewirkt. Die resultierende Kraft auf die erste(n) Kolbenstange(n) bewirkt also dass die erste(n) Kolbenstange(n) vom Werkstück wegbewegt bzw. zurückgezogen wird. Das Pneumatikelement kann folglich als doppelwirkendes Pneumatikelement betrieben werden.

Durch das Rückzugventil des ersten Pneumatikelements ist ein schnelles Rückziehen der ersten Kolbenstange(n) und, falls die zweite(n) Kolbenstange(n) sich in Wirkverbindung mit der (den) ersten Kolbenstange(n) befindet, auch der zweiten Kolbenstange(n) möglich.

Als Rückzugventile können beispielsweise auch 3/2-Wegeventile mit einem Entlüftungsanschluss verwendet werden.

Alternativ kann das Rückzugventil mit dem Ausfahrventil des ersten Pneumatikelements in Form eines Wegeventils kombiniert werden, beispielsweise in Form eines 4/2-Wegeventils, eines 4/3-Wegeventils oder 5/2-Wegeventils.

In einer besonderen Ausführungsform umfasst die Gitterschweissanlage ein Steuermodul, welches so ausgestattet ist, dass es die Steuereinrichtungen der Pneumatikelemente getrennt anzusteuern vermag und das Vorschub- und das Rückzugventil des ersten Pneumatikelements mit dem Vorschubventil des zweiten Pneumatikelements zu synchronisieren vermag. Durch die getrennte Ansteuerung der Steuereinrichtungen, insbesondere der Vorschub- bzw. Rückzugventile ist eine optimierte Bewegungsführung der Kolbenstange(n) und damit des Werkzeugs und auch des Anpressdrucks bzw. der Anpresskraft möglich. Beispielsweise kann das zweite Pneumatikelement mit einer Zeitverzögerung zum ersten Pneumatikelement ausgefahren werden, um den Stoss des Werkzeugs zu verringern. Zudem kann eine gewisse Anpresskraft erst im Laufe des Schweissprozesses erforderlich sein, so dass das zweite Pneumatikelement erst später aktiviert werden kann. Umgekehrt kann es vorteilhaft sein, während des Schweissvorgangs mit dem Vorschubventil des zweiten Pneumatikelements die Druckluftzufuhr abzustellen um die Anpresskraft zu reduzieren und die zweite(n) Kolbenstange(n), beispielsweise durch das Rückstellelement, in die Ruheposition zurückzustellen. Die Synchronisierung kann auch das Vorhalten von Stellzeiten beinhalten, welche es ermöglicht den Schweisszyklus zeitlich zu optimieren. Besonders bevorzugt ist, dass die Synchronisierung programmierbar ist. Es ist jedoch auch möglich, die Synchronisierung durch Hardwarekomponenten wie elektrische oder mechanische Verzögerungsglieder zu realisieren.

Alternativ können die Steuereinrichtungen der Pneumatikelemente nur gemeinsam angesteuert werden.

In einer besonderen Ausführungsform umfasst die Gitterschweissanlage eine Stabzuführung, zum getakteten Zuführen von zu verschweissenden Stäben, und insbesondere eine Positioniereinrichtung zum Positionieren der zu verschweissenden Stäbe in einem Werkzeugbereich, insbesondere einer magnetischen Positioniereinrichtung.

Durch die Positioniervorrichtung können quer liegende Gitterstäbe vor dem Verschweissen auf einen Anschlag gezogen und deren Lage überwacht werden, wodurch die Anlage mit erhöhter Taktzeit betrieben werden kann. In einer besonderen Ausführungsform kann durch die magnetische Positioniervorrichtung der Gitterdrahtdurchmesser erkannt und damit automatisch die Anpresskraft über die Anpressvorrichtung eingestellt werden.

In einer besonderen Ausführungsform umfasst die Gitterschweissanlage eine Mehrzahl paralleler Anordnungen mit je dem ersten und dem zweiten Pneumatikelement.

Eine Gitterschweissanlage verschweisst Längs- und Querstäbe zu einem Gitter. Die Mehrzahl der parallelen Anordnungen wird dabei bevorzugt in Richtung der zu verschweissenden Querdrähte angeordnet. Dadurch lässt sich die Gitterschweissanlage einfach an die zu fertigenden Gitter anpassen bzw. skalieren. Dabei kann vorgesehen werden, dass jeweils mehrere parallele Anordnungen zu einer Gruppe angeordnet ist, welche mit einem Werkzeug, beispielsweise einer Elektrode eine Wirkverbindung herstellen können. Dadurch kann die Anpresskraft pro Werkzeug respektive pro Elektrode oder Längsstab erhöht werden.

Ein weiterer Aspekt der vorliegenden Erfindung ist ein Verfahren zum Schweissen von Gitterstäben. Das Verfahren umfasst die Schritte:
a) Bereitstellen einer erfindungsgemässen Gitterschweissanlage gemäss Anspruch 1;
b) Zuführen und Positionieren von zu verschweissenden Stäben in einen Werkzeugbereich der Gitterschweissanlage;
c) Aktivieren des ersten Pneumatikelements zur Zuführung des Werkzeugs in den Werkzeugbereich mit einer ersten Anpresskraft F₁ und Auslösen eines Schweissstroms, insbesondere eines Wechselstroms, und,
d) eventuell aktivieren des zweiten Pneumatikelements zur Addition einer zweiten Anpresskraft F₂ an die erste Anpresskraft F₁.

Die Aktivierung des zweiten Pneumatikelements ist dabei abhängig von der benötigten Anpresskraft. Kann die notwendige Anpresskraft vom ersten Pneumatikelement abgedeckt werden, wird bevorzugt nur das erste Pneumatikelement aktiviert. Vor allem bei kleinen Anpresskräften kann die Anpresskraft dadurch präziser eingestellt werden, da die Reibung des zweiten Pneumatikelements sich nicht auf die Anpresskraft auswirkt.

Alternativ ist es auch möglich, nur das zweite Pneumatikelement zu aktivieren.

In einer besonderen Ausführungsform werden die Schritte c) und d) des Verfahrens synchronisiert.

Es kann vorteilhaft sein, die Schritte c) und d) zeitlich zu synchronisieren, bzw. mit einem bestimmten Zeitversatz auszuführen, um beispielsweise den Stoss beim Auftreffen der ersten Kolbenstange(n) auf das Werkzeug der Gitterschweissanlage und/oder des Werkzeugs auf die Gitterstäbe zu reduzieren. Zudem kann, sofern eine kleinere Anpresskraft am Anfang eines Schweisszyklus benötigt wird, zu Beginn nur das erste Pneumatikelement aktiviert ist und das zweite, falls erforderlich erst aktiviert wird, wenn im Verlauf des Zyklus eine höhere Anpresskraft erforderlich ist oder auch um die Anpresskraft trotz des sich veränderten Abstands der miteinander verschmelzenden Gitterdrähte die Anpresskraft nachsetzen zu können. Die am Anfang des Prozesses geringere Anpresskraft kann somit präziser aufgebaut werden.

Umgekehrt kann es auch vorteilhaft sein, dass das zweite Pneumatikelement vor dem ersten Pneumatikelement deaktiviert wird, um am Ende des Schweissprozesses eine kleinere definierte Prozesskraft einzustellen und damit die Gittergeometrie und die Verschweissung zu optimieren.

Die Synchronisierung kann dabei sowohl zeitbasiert sein als auch ereignisgesteuert. Beispielsweise kann bei Überschreiten einer bestimmten Anpresskraftschwelle oder auch einer Schwelle des Schweissstroms das zweite Pneumatikelement aktiviert oder auch deaktiviert werden.

Die Synchronisierung kann auch verwendet werden, um elektrische und mechanische Zeitkonstanten oder Signallaufzeiten zu kompensieren oder abzustimmen.

Alternativ kann jedoch eine gleichzeitige Ansteuerung der beiden Pneumatikelemente verwendet werden.

In einer besonderen Ausführungsform wird die Summe der Anpresskräfte abhängig von Durchmesser und/oder Material der zu verschweissenden Stäbe eingestellt, insbesondere dergestalt, dass ein allfälliges plastisches Verformen durch ein Einwirken der Anpresskräfte auf die Stäbe im Wesentlichen verhindert wird.

Durch das Abstimmen der Anpresskraft kann einerseits die Gitterqualität in Bezug auf die Verschweissstellen sowie auf die geometrische Genauigkeit optimiert und auch in Abhängigkeit des Schweissstromes die Schweisszeit optimiert werden.

In einer besonderen Ausführungsform wird der Schweissstrom über einen Zeitraum X aufrechterhalten und die Anpresskraft F₁ und/oder F₂ über diesen Zeitraum variiert, insbesondere erhöht.

Es kann somit der Verlauf der resultierenden Anpresskraft über den Schweisszyklus variiert und auf den Durchmesser und/oder das Material der Gitterstäbe abgestimmt werden.

Alternativ kann die Anpresskraft F₁ und/oder F₂ über diesen Zeitraum konstant gehalten werden, wobei die Kolbenstange(n) während des Schweissvorgangs nachsetzen, um die Anpresskraft F₁ und/oder F₂ oder auch die Summe der beiden Kräfte konstant zu halten.

In einer besonderen Ausführungsform, wird der Schweissstrom während des Zeitraums X in seiner Amplitude und/oder Frequenz variiert.

Ein Bausatz zur Aufrüstung einer Gitterschweissanlage zu einer erfindungsgemässen Gitterschweissanlage wie sie durch die kennzeichnenden Merkmale des unabhängigen Anspruchs 1 definiert ist, umfasst:
a) Ein erstes Pneumatikelement mit mindestens einer ersten Kolbenstange, welche so ausgestaltet ist, dass sie mit einem der Werkzeuge der Gitterschweissanlage in Wirkverbindung gebracht werden kann;
b) ein zweites Pneumatikelement mit mindestens einer zweiten Kolbenstange welche so ausgestaltet ist, dass sie mit der ersten Kolbenstange in Wirkverbindung gebracht werden kann, und
c) ein Verbindungselement, welches ausgelegt ist, das erste Pneumatikelement mit dem zweiten Pneumatikelement in Wirkverbindung zu bringen und welches insbesondere eine Kontaktstelle zur Herstellung einer Kontaktverbindung aufweist, welche ausgelegt ist um die erste Kolbenstange in Wirkverbindung mit der zweiten Kolbenstange zu bringen, insbesondere wobei die Kontaktstelle aus Messing ist,
d) wobei eine Anpresskraft sowohl nur vom ersten als auch gleichzeitig vom ersten und vom zweiten Pneumatikelement aufgebracht werden kann.

Das erste Pneumatikelement umfasst bevorzugt zwei parallel zueinander angeordnete Pneumatikzylinder mit jeweils einer ersten Kolbenstange und einem ersten Kolben und das zweite Pneumatikelement umfasst bevorzugt zwei parallel zueinander angerordnete Pneumatikzylinder mit jeweils einer zweiten Kolbenstange und einem zweiten Kolben.

In einer besonderen Ausführungsform sind die Pneumatikzylinder des ersten und/oder zweiten Pneumatikelements als Duplexzylinder ausgebildet und die Kolben als Duplexkolben. Ein Duplexzylinder ist in zwei in Richtung der Längsachse der Kolbenstange hintereinander liegende Teilzylinder unterteilt. Ein Duplexkolben umfasst dabei zwei über die Kolbenstange verbundene Kolben die jeweils in einem Teilzylinder angeordnet sind.

In einer weiteren besonderen Ausführungsform sind die Pneumatikzylinder des ersten und des zweiten Pneumatikelements als Triplexzylinder mit einem Triplexkolben ausgebildet.

Im Folgenden wird die Erfindung anhand von Figuren und konkreter Ausführungsbeispiele näher erläutert, ohne allerdings auf diese eingeschränkt zu sein.

Aus der Detailbeschreibung und der Gesamtheit der Patentansprüche können sich zudem weitere vorteilhafte Ausführungsformen und Merkmalskombinationen der Erfindung ergeben.

### Kurze Beschreibung der Zeichnungen

Die zur Erläuterung des Ausführungsbeispiels verwendeten Zeichnungen zeigen:
Fig. 1a Blockdiagramm eines ersten Ausführungsbeispiels der erfindungsgemässen Gitterschweissanlage;
Fig. 1b Prinzipskizze der Anpressvorrichtung des ersten Ausführungsbeispiels der erfindungsgemässen Gitterschweissanlage;
Fig. 2a Perspektivische und schematische Ansicht der Anpressvorrichtung eines zweiten Ausführungsbeispiels der erfindungsgemässen Gitterschweissanlage;
Fig. 2b Schnittansicht und schematische Ansicht der Anpressvorrichtung gemäss Fig. 2a;
Fig. 3 Perspektivische und schematische Ansicht zweier parallel angeordneter Einzelschweissgruppen eines dritten Ausführungsbeispiels der erfindungsgemässen Gitterschweissanlage.

Grundsätzlich sind in den Figuren gleiche Teile mit gleichen Bezugszeichen versehen.

### Wege zur Ausführung der Erfindung

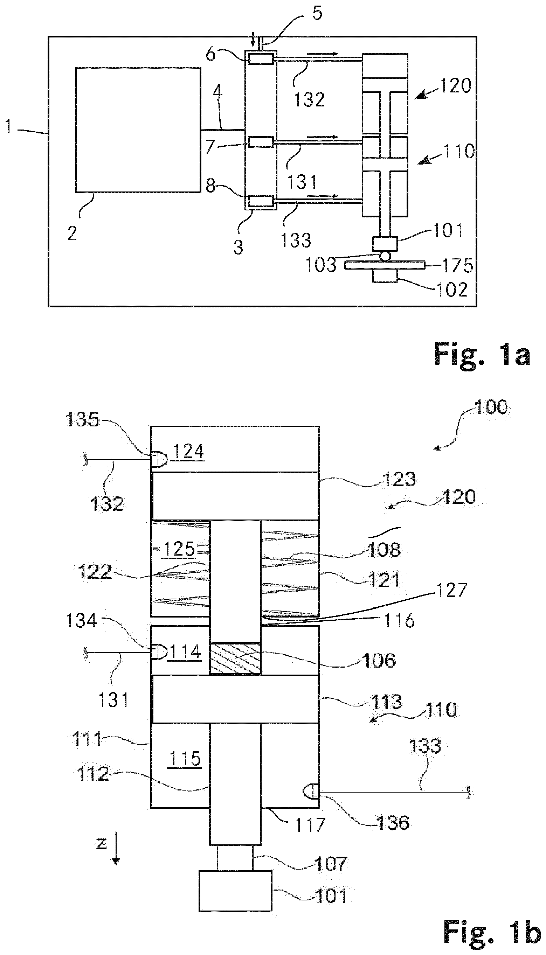

Fig. 1a zeigt ein Blockdiagramm eines ersten Ausführungsbeispiels der erfindungsgemässen Gitterschweissanlage 1 mit einer Anpressvorrichtung 100. Der funktionelle Aufbau der Anpressvorrichtung aus Fig. 1a ist in Fig. 1b in Form einer Prinzipskizze etwas detaillierter dargestellt.

Die Gitterschweissanlage 1 umfasst ein Steuermodul 2, welches die Ventile einer Ventilinsel 3 ansteuern und damit die Anpressvorrichtung 100 mit einem ersten Pneumatikelement 110 und einem zweiten Pneumatikelement 120 betätigen kann, wobei das erste Pneumatikelement 110 und das zweite Pneumatikelement 120 übereinander in Serie angeordnet sind.

Die Ventile der Ventilinsel 3 sind über eine elektrische Steuerleitung 4 mit dem Steuermodul verbunden und werden über dieses angesteuert. Über die Anpressvorrichtung 100 kann eine am ersten Pneumatikelement 110 befestigte obere Elektrode 101 in Richtung einer unteren Elektrode 102 abgesenkt und damit ein Querstab 103 mit einem Längsstab 175 zum Verschweissen zwischen der oberen Elektrode 101 und der unteren Elektrode 102 mit einer bestimmten Anpresskraft verpresst werden.

Die Ventilinsel 3 wird über eine Druckluftleitung 5 mit Druckluft versorgt und umfasst ein erstes Vorschubventil 6 zum Absenken der ersten Kolbenstange 112 des ersten Pneumatikelements 110 in Anpressrichtung, ein zweites Vorschubventil 7 zum Absenken der zweiten Kolbenstange 122 des zweiten Pneumatikelements 120 in Anpressrichtung sowie ein Rückzugventil 8 zum Anheben der ersten Kolbenstange 112 des ersten Pneumatikelements 120 in der zur Anpressrichtung Z entgegengesetzten Richtung, z.B. nach einem Schweissvorgang. Das erste Vorschubventil 6 ist über einen ersten Luftkanal 131 mit dem Luftanschluss 134 für das Absenken der ersten Kolbenstange 112 des ersten Pneumatikelements 110, das zweite Vorschubventil 7 über einen zweiten Luftkanal 132 mit dem Lufteinlass 135 für das Absenken der zweiten Kolbenstange 122 des zweiten Pneumatikelements 120 und das dritte Einlassventil 8 mit dem dritten Luftkanal 133 mit dem Lufteinlass 136 für das Anheben der zweiten Kolbenstange 122 des ersten Pneumatikelements 120 verbunden.

Das erste Pneumatikelement 110 umfasst einen ersten Zylinder 111, in welchem eine erste Kolbenstange 112 zentrisch angeordnet ist und in Richtung der Längsachse Z frei beweglich ist. Am oberen Ende der ersten Kolbenstange 112 ist ein zylindrischer erster Kolben 113 angeordnet, welcher den Innenraum des ersten Zylinders 111 in eine erste obere Luftkammer 114 und in eine untere Luftkammer 115 aufteilt. Der erste Zylinder 111 hat an der oberen Grundfläche, welche an die obere Luftkammer 116 angrenzt, eine zentrische kreisrunde obere Öffnung 116, durch die eine zweite Kolbenstange 122 des zweiten Pneumatikelements 130 hindurch auf die Kolbenoberseite des ersten Kolbens 113 zu drücken vermag. Der Durchmesser der oberen Kolbenstange 122 ist dabei an den Durchmesser der oberen Öffnung 116 angepasst, um ein Entweichen der Luft aus der Öffnung zu verhindern. An der unteren Grundfläche des ersten Zylinders 111 ist eine ebenfalls konzentrische kreisrunde untere Öffnung 117 angeordnet, durch welche die erste Kolbenstange 112 aus dem Zylinder 111 hinausragt. Am unteren Ende der ersten Kolbenstange 112, ist die Werkzeugschnittstelle 107 angeordnet, an welcher eine obere Elektrode 101 befestigt ist. Durch Einlassen von Druckluft über den ersten Luftkanal 131 und den ersten Lufteinlass 134 in die erste obere Luftkammer 115 wird die erste Kolbenstange 112 abgesenkt und eine Anpresskraft erzeugt, wenn die Elektrode in Wirkverbindung mit dem Querstab 103 gerät. Entsprechend kann durch Einlassen von Druckluft in die untere Luftkammer 115 über den dritten Luftkanal 133 und den dritten Lufteinlass 136 die erste Kolbenstange 112 zusammen mit der oberen Elektrode 101 nach oben bewegt werden.

Das zweite Pneumatikelement 120 ist ähnlich aufgebaut wie das erste Pneumatikelement 110. Es umfasst einen zweiten Zylinder 121, in welchem eine zweite Kolbenstange 122 zentrisch angeordnet ist und in Richtung der Längsachse Z frei beweglich ist. Am oberen Ende der zweiten Kolbenstange 122 ist ein zylindrischer zweiter Kolben 123 befestigt, welcher den Innenraum des zweiten Zylinders 121 in eine zweite obere Luftkammer 124 und in eine zweite untere Luftkammer 125 aufteilt. Der zweite Zylinder 121 hat an der unteren Grundfläche, welche an die untere Luftkammer 125 angrenzt, eine zentrische kreisrunde untere Öffnung 127, durch die die Kolbenstange 122 des zweiten Pneumatikelements 120 hindurch auf die Kolbenoberseite des ersten Kolbens 113 zu drücken vermag. Durch Einlassen von Druckluft über den zweiten Luftkanal 132 und den zweiten Lufteinlass 135 in die zweite obere Luftkammer 125 kann die zweite Kolbenstange 112 abgesenkt und dadurch über eine Kontaktstelle 106 aus Messing eine Kontaktverbindung mit dem ersten Kolben 113 hergestellt werden, indem die Kontaktstelle 106 auf die Kolbenoberfläche des ersten Kolbens 113 gedrückt wird. Die zylindrische Kontaktstelle 106 aus Messing ist an der Unterseite in direkter Verlängerung der zweiten Kolbenstange 122 angebracht, um bei der Herstellung der Kontaktverbindung zwischen dem ersten Kolben 112 respektive den an der Kolbenstange 112 befestigten Kolben 113 und der zweiten Kolbenstange 122 den Stoss und die Kraftspitzen und damit auch den Verschleiss zu reduzieren. Die Kolbenstangen 112, 122 und die Kolben 113,123 sind aus Stahl gefertigt und damit härter als Messing. Jedoch können sie auch aus anderen Materialien gefertigt sein, welche den rauen Anforderungen in einer Schweissanlage gerecht werden.

In der zweiten unteren Luftkammer 125 ist eine Rückstellfeder 108 angebracht, welche die zweite Kolbenstange 122 in eine Ruheposition in einen Endanschlag zurückbewegt bzw. die Kolbenstange anhebt und in den zweiten Zylinder 121 einfährt, wenn die obere Luftkammer 124 des zweiten Pneumatikelements 120 nicht mit Druckluft beaufschlagt wird. Dadurch wird auch die Kontaktverbindung zwischen der ersten Kolbenstange 112 und der zweiten Kolbenstange 122 aufgehoben. In diesem Fall trägt dann nur das erste Pneumatikelement 110 zur Bewegung der oberen Elektrode 101 bzw. zum Aufbau der Anpresskraft bei. Es muss auch weder beim Absenken respektive Anpressen noch beim Abheben die Reibung des ersten Pneumatikzylinders 120 überwunden werden. Ist die Kolbenstange 122 des zweiten Pneumatikelements 120 noch in einer abgesenkten Position, kann sie sowohl von der Rückstellfeder 108 als auch von der ersten Kolbenstange 112 angehoben bzw. in die Ruheposition bewegt werden. Ein eigener Lufteinlass für die untere Luftkammer 125 des zweiten Pneumatikelements 120 ist in der Regel nicht erforderlich, kann jedoch auch vorgesehen werden, falls die Anhebegeschwindigkeit erhöht werden sollte.

Es ist zu beachten, dass jedes der beiden Pneumatikelemente 110, 120 ein eigenes Vorschubventil 6, 7 besitzt. Dadurch wird einerseits eine zeitverzögerte Ansteuerung der Pneumatikelemente ermöglicht, gleichzeitig kann aber auch die Druckluft in den beiden Zylinder 111, 121 schneller aufgebaut werden als mit einem gemeinsamen Vorschubventil. Es wird noch darauf hingewiesen, dass auch Entlüftungskanäle vorgesehen sind. Sie sind aber aus Gründen der Übersichtlichkeit nicht beschrieben und in den Fig. 1a und 1b nicht dargestellt.

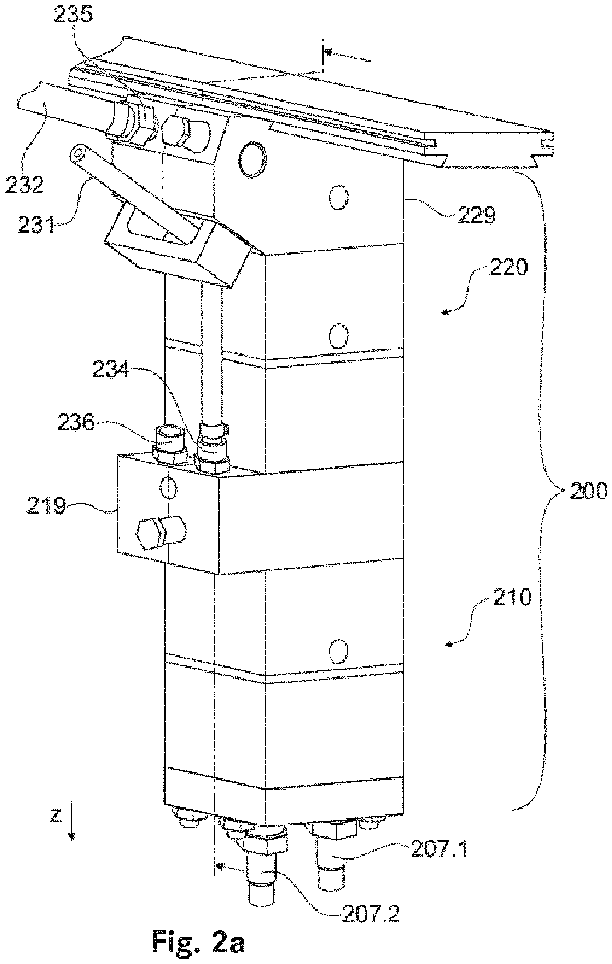

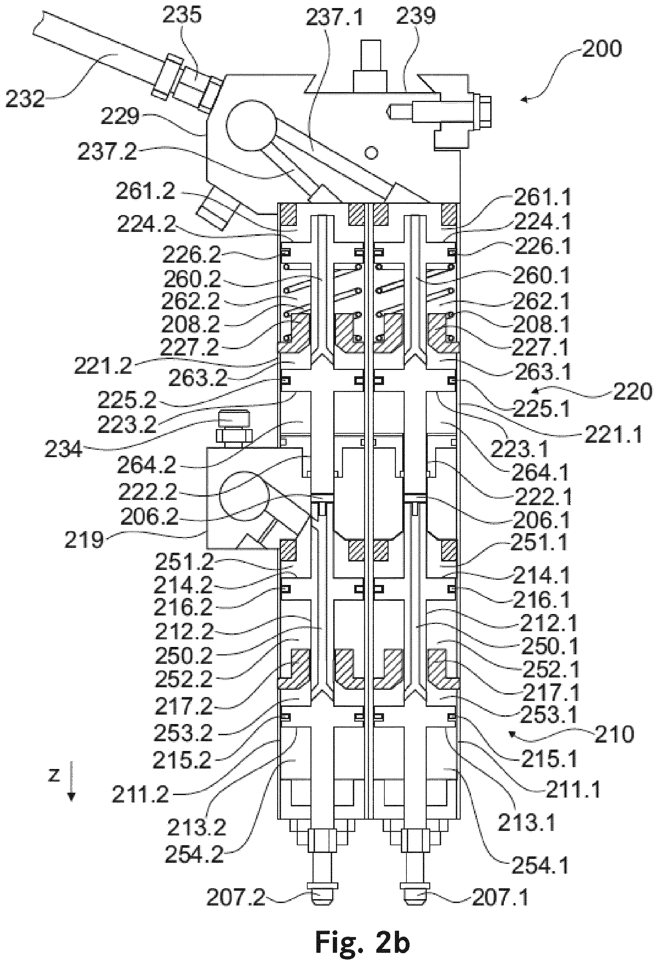

Fig. 2a zeigt eine perspektivische und schematische Ansicht der Anpressvorrichtung 200 eines zweiten Ausführungsbeispiels der erfindungsgemässen Gitterschweissanlage. Ein in Fig. 2a angedeuteter Längsschnitt durch die Anpressvorrichtung 200 ist in Fig. 2b dargestellt.

Die Anpressvorrichtung 200 umfasst ein erstes Pneumatikelement 210 und ein zweites Pneumatikelement 220, die so übereinander angeordnet sind, dass ihre Kolbenstangen in Serie wirken können.

Beide Pneumatikelemente 210, 220 umfassen jeweils zwei in Richtung der zu verschweissenden Längsdrähte (nicht sichtbar) parallel hintereinander angeordnete Zylinder 211.1, 211.2, 221.1, 221.2 mit jeweils einem Duplexkolben. Ein jeder der insgesamt vier Duplexkolben umfasst dabei einen oberen Kolben 214.1, 214.2, 224.1, 224.2 und einen unteren Kolben 213.1, 213.2, 223.1, 223.2, welche jeweils an einer Kolbenstange 212.1, 212.2, 222.1, 222.2 befestigt sind. Die oberen und unteren Kolben 213.1, 213.2, 223.1, 223.2, 214.1, 214.2, 224.1, 224.2 sind zylindrisch und umfassen jeweils einen Dichtungsring 215.1, 215.2, 216.1, 216.2, 225.1, 225.2, 226.1, 226.2 welcher die Aussenfläche des jeweiligen Kolbens 214.1, 214.2, 224.1, 224.2 gegenüber dem jeweiligen Zylinder 211.1, 211.2, 221.1, 221.2 luftdicht abdichtet.

Jeder Zylinder 211.1, 211.2, 221.1, 221.2 ist ferner durch eine konzentrische Unterteilung 217.1, 217.2, 227.1, 227.2 in einen oberen und einen unteren Teilzylinder unterteilt. Die jeweilige Unterteilung 217.1, 217.2, 227.1, 227.2 weist in der Mitte eine Öffnung auf, die als Führung für die Kolbenstangen 212.1, 212.2, 222.1, 222.2 dient. Die oberen Kolben 214.1, 214.2, 224.1, 224.2 teilen die oberen Teilzylinder in eine erste obere Luftkammer 251.1, 251.2, 261.1, 261.2 und in eine erste untere Luftkammer 252.1, 252.2, 262.1, 262.2. Die unteren Kolben 213.1, 213.2, 223.1, 223.2 dagegen unterteilen die unteren Teilzylinder in eine zweite obere Luftkammer, 253.1, 253.2, 263.1, 263.2 und in eine zweite untere Luftkammer 254.1, 254.2, 264.1, 264.2.

Das erste Pneumatikelement 210 umfasst oberhalb der parallel nebeneinander angeordneten Zylinder 211.1. 211.2 ein quaderförmiges erstes Anschlussstück 219 mit einem ersten Druckluftanschluss 234 für das Absenken bzw. Anpressen der ersten Kolbenstangen für 212.1, 212.2 und einen Druckluftanschluss 236 (Fig. 2a) für das Anheben bzw. Zurückziehen der ersten Kolbenstangen 212.1, 212.2.

Der erste Druckluftanschluss 234 ist über die erste Druckluftleitung 231 mit einem ersten Vorschubventil verbunden (nicht sichtbar), welches die Druckluft für das Absenken der ersten Kolbenstangen 212.1, 212.2 über zum Teil nicht sichtbare Luftkanäle in die ersten oberen Luftkammern 251.1, 251.2 einlassen kann. Gleichzeitig kann die Druckluft von den ersten oberen Luftkammern 251.1, 251.2 der oberen Teilzylinder über Luftkanäle 250.1, 250.2 durch die Kolbenstangen 212.1, 212.2 in die zweiten oberen Luftkammern 253.1, 253.2 des unteren Teilzylinders gelangen. Die Druckluft für das Anheben der Kolbenstangen 212.1, 212.2 gelangt über nicht sichtbare Kanäle in die unteren Luftkammern 252.1, 252.2, 254.1, 254.2.

Durch die Duplexkolben wird die gesamte Kolbenoberfläche verdoppelt oder die maximale Anpresskraft eines Zylinders nahezu verdoppelt.

Das zweite Pneumatikelement 220 ist ähnlich wie das erste Pneumatikelement 210 aufgebaut und direkt oberhalb des ersten Anschlussstücks 219 angebracht, so dass die zweiten Kolbenstangen 222.1, 222.2 des zweiten Pneumatikelements 220 in der direkten Verlängerung der Kolbenstangen 212.1, 212.2 des ersten Pneumatikelements 210 liegen und damit in Serie zu den ersten Kolbenstangen 212.1, 212.1 angeordnet sind und mit diesen eine Kontaktverbindung herstellen können. In dem ersten Anschlussstück 219 des ersten Pneumatikelements sind daher zwei kreisrunde Öffnungen vorgesehen, deren Durchmesser auf die Aussendurchmesser der zweiten Kolbenstangen 222.1, 222.2 abgestimmt sind.

Am oberen Ende des zweiten Pneumatikelements 220 ist ein ebenfalls im Wesentlichen quaderförmiges Anschlussstück 229 für das zweite Pneumatikelement 220 mit einem Druckluftanschluss 235 für das Absenken der Kolbenstangen 222.1, 222.2 angeordnet. Das Anschlussstück 229 umfasst an seiner Oberseite eine Montageführung 239 zur Befestigung der Anpressvorrichtung 200 an die Gitterschweissanlage. Der zweite Druckluftanschluss 235 ist über die zweite Druckluftleitung 232 mit einem zweiten Vorschubventil verbunden, welches die Druckluft für das Absenken der zweiten Kolbenstangen 222.1, 222.2 über Luftkanäle 237.1 und 237.2 im Anschlussblock 229 in die ersten oberen Luftkammern 261.1, 261.2 im oberen Teilzylinder des zweiten Pneumatikelements 220 einlassen kann. Gleichzeitig kann die Druckluft von den ersten oberen Luftkammern 261.1, 261.2 über Luftkanäle 260.1, 260.2 in den zweiten Kolbenstangen 222.1, 222.2 in die zweiten oberen Luftkammern 263.1, 263.2 des unteren Teilzylinders des zweiten Pneumatikelements 220 gelangen. Die zweiten Kolbenstangen 222.1, 222.2 in den beiden parallel angeordneten Zylindern 221.1 und 221.2 werden jeweils von einer Rückstellfeder 208.1 und 208.2 in Ruheposition bewegt bzw. gehalten wenn keine Druckluft am Drucklufteingang 235 anliegt.

In der Ruheposition befinden sich die Kolbenstangen 222. 1, 222.2 des zweiten Pneumatikelements 220 am oberen Anschlag. Die Rückstellfedern 208.1, 208.2 sind als Druckfedern ausgelegt und in den ersten unteren Luftkammern 262.1, 262.2 zwischen den unteren Grundflächen der oberen Kolben 224.1, 224.2 und den Unterteilungen 208.1, 208.2 des zweiten Pneumatikelements 220 angeordnet.

Liegt jedoch Druckluft am Druckluftanschluss 235 des zweiten Pneumatikelements 220 an, dann werden die Kolbenstangen 222.1 und 222.2 des zweiten Pneumatikelements 220 abgesenkt, bis sie mit den oberen Enden der ersten Kolbenstangen 212.1, 212.2 des unteren Pneumatikelements eine Kontaktverbindung herstellen, so dass die mittels der zweiten Kolbenstangen 222.1, 222.2 des zweiten Pneumatikelements 220 pneumatisch erzeugte Kraft auf die ersten Kolbenstangen 212.1, 212.2 des ersten Pneumatikelements 210 einwirkt. Am oberen Ende der ersten Kolbenstangen 212.1, 212.2 sind in deren Verlängerung jeweils Kontaktstellen 206.1, 206.2 aus Messing befestigt, die gleichzeitig die Luftkanäle 250.1, 250.2 in den ersten Kolbenstangen 212.1, 212.2 pfropfenartig nach oben abschliessen. Die Kontaktstellen dienen zum Abdämpfen des Stosses, der auftritt, wenn die zweiten Kolbenstangen 222.1, 222.2 des zweiten Pneumatikelements 220 mit den ersten Kolbenstangen 212.1, 212.2 des ersten Pneumatikelements 210 in Kontakt kommen. Die Kontaktstellen 206.1, 206.2 aus Messing könnten jedoch auch an den Kolbenstangen 222.1, 222.2 des zweiten Pneumatikelements 220 befestigt sein.

An den unteren Enden der Kolbenstangen sind in deren direkten Verlängerung Werkzeugschnittstellen angeordnet 207.1, 207.2, an welche eine oberen Elektrode (nicht dargestellt) befestigt werden kann.

Je nach Bedarf kann nur die erste Pneumatikeinheit 210 verwendet werden oder auch die zweite Pneumatikeinheit 220 dazugeschaltet werden und somit eine höhere Anpresskraft erzeugt werden. Im ersten Fall ist die zweite Pneumatikeinheit 220 nicht aktiv und in Ruheposition und benötigt auch keine Druckluft. Im zweiten Fall addieren sich die Kräfte der beiden Pneumatikeinheiten. In diesem Fall wird sowohl das erste als auch das zweite Pneumatikelement mit Druckluft versorgt.

Je nach Durchmesser der Gitterstäbe, die verschweisst werden, ist die erforderliche Anpresskraft unterschiedlich. Zwischen der erforderlichen Anpresskraft besteht beim Wechselstromschweissen folgender Zusammenhang:

| Durchmesser [mm] | Anpresskraft [kN] |
|---|---|
| 2 | 0.29 |
| 3 | 0.55 |
| 4 | 1.0 |
| 6 | 2.0 |
| 8 | 3.0 |
| 10 | 4.0 |
| 12 | 5.0 |
| 14 | 6.0 |
| 16 | 7.0 |

Durch die Anpressvorrichtung 200 können Schweisskräfte von 0.6 kN bis 6.7 kN bei einer Baubreite von 50 mm abgedeckt werden. Die untere Anpresskraft der Anpressvorrichtung wird bestimmt durch die minimale Kraft, bei welcher sich die Anpressvorrichtung trotz Reibung noch schnell und zuverlässig bewegen kann.

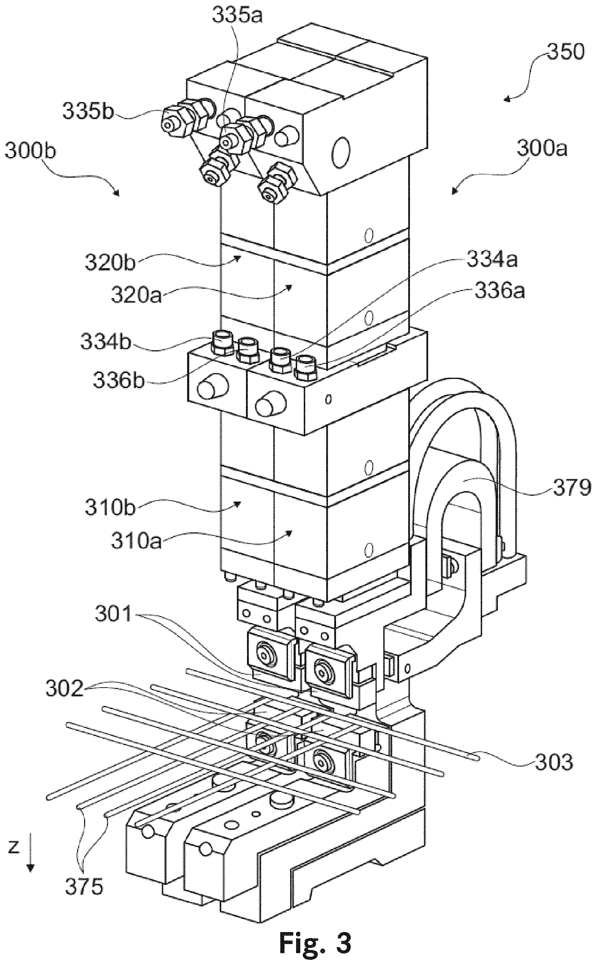

Fig. 3 zeigt eine perspektivische und schematische Ansicht einer Anordnung 350 mit zwei parallel zueinander angeordneten Einzelschweissgruppen einer erfindungsgemässen Gitterschweissanlage. Jede Einzelschweissgruppe umfasst dabei jeweils eine Anpressvorrichtung 300a, 300b und einen oberen Elektrodenhalter mit einer oberen Elektrode 301 sowie einen unteren Elektrodenhalter mit einer unteren Elektrode 302. Die beiden Anpressvorrichtungen 300a, 300b sind dabei parallel zueinander in Richtung der zu verschweissenden Querstäbe 303 angeordnet. Die Anpressvorrichtungen 300a, 300b entsprechen jeweils den Anpressvorrichtungen 200 gemäss den Figuren 2a und 2b. Jede dieser Anpressvorrichtungen 300a, 300b umfasst entsprechend ein erstes Pneumatikelement 310a, 310b und ein zweites Pneumatikelement 320a, 320b sowie einen ersten Druckluftanschluss 334a, 334b für das Absenken der Kolbenstangen des ersten Pneumatikelements, einen zweiten Druckluftanschluss 335b für das Absenken der Kolbenstangen des zweiten Pneumatikelements 320a, 320b sowie einen dritten Druckluftanschluss 336a, 336b für das Anheben der Kolbenstangen des ersten Pneumatikelements 310a, 310b. Beim Anheben der Kolbenstangen des ersten Pneumatikelements 310a, 310b können die Kolbenstangen 320a, 320b des zweiten Pneumatikelements 320a, 320b mit angehoben werden, sofern sich die zweiten Kolbenstangen in Kontaktverbindung mit den ersten Kolbenstangen befinden.

In der Gitterschweissanlage werden durch elektrisches Widerstandsschweissen Querdrähte 303 und Längsdrähte 375 eines Gitters, beispielsweise eines Armierungs- oder Industriegitters, verschweisst. Für zwei Längsdrähte 375 wird jeweils eine Einzelschweisseinheit benötigt. Die Längsdrähte 375 werden den Einzelschweissmodulen von der Rückseite her zwischen den beiden Elektroden 301 und 302 hindurch in Längsdrahtrichtung zugeführt. Die Querdrähte 303 werden dagegen von der Seite in Querrichtung von schräg oberhalb der Sollposition für das Schweissen eingeworfen und über eine nicht sichtbare magnetische Positioniervorrichtung positioniert. Sind die Querstäbe positioniert, wird der Schweissvorgang eingeleitet und der positionierte Querstab 303 mit jeweils zwei Längsstäben 375 für den Schweissvorgang mittels der Anpressvorrichtungen 300a, 300b durch Absenken der ersten Kolbenstangen des ersten Pneumatikelements 310a, 310b mit den daran am unteren Ende befestigten oberen Elektroden 301 zusammenpresst. Der Schweissstrom wird zu den oberen Elektroden 301 in Form von Wechselstrom jeder Einheit über ein flexibles Stromband 379 geführt.

Beim Schweissvorgang werden die Gitterdrähte durch elektrischen Strom auf Schweisstemperatur erwärmt und Querdrähte 303 und Längsdrähte 375 durch gleichzeitiges Einwirken der Anpresskraft stoffschlüssig miteinander verbunden. Je nach erforderlicher Anpresskraft werden die zweiten Pneumatikelemente 320a, 320 b aktiviert.

Die Gitterschweissanlagen können selbstverständlich weitere Anpressvorrichtungen umfassen.

Zusammenfassend ist festzustellen, dass eine Gitterschweissanlage geschaffen wurde, welche es ermöglicht, in einem grossen Kraftbereich kosteneffizient Gitterstäbe verschweissen zu können. Es ist weiterhin festzustellen, dass ein Verfahren geschaffen wurde, welches ein kosteneffizientes Verschweissen von Gitterstäben in einem grossen Kraftbereich ermöglicht. Zudem ist festzustellen, dass ein Bausatz geschaffen wurde, welcher es auf einfache und kostengünstige Weise ermöglicht Gitterschweissanlagen aufzurüsten, um deren Kraftbereich zu erweitern.

## Patentansprüche

1. Gitterschweissanlage (1) umfassend eine Anpressvorrichtung (100, 200, 300a, 300b) für mindestens ein Werkzeug (101, 301) der Gitterschweissanlage (1), die Anpressvorrichtung (100, 200, 300a, 300b) umfassend:
a) Ein erstes Pneumatikelement (110, 210, 310a, 310b) mit mindestens einer ersten Kolbenstange (112, 212.1, 212.2), welche so ausgestaltet ist, dass sie mit einem der Werkzeuge (101, 301) der Gitterschweissanlage (1) in Wirkverbindung gebracht werden kann;
**dadurch gekennzeichnet, dass** die Anpressvorrichtung weiterhin umfasst:
b) ein zweites Pneumatikelement (120, 220, 320a, 320b) mit mindestens einer zweiten Kolbenstange (122, 222.1, 222.2), welche so ausgestaltet ist, dass sie mit dem ersten Pneumatikelement (110, 210, 310a, 310b), insbesondere mit der ersten Kolbenstange (112, 212.1, 212.2) in Wirkverbindung gebracht werden kann, und wobei
das erste und das zweite Pneumatikelement (110, 210, 310a, 310b, 120, 220, 320a, 320b) so angeordnet sind, dass die erste(n) und zweite(n) Kolbenstange(n) (112, 212.1, 212.2, 122, 222.1, 222.2) durch eine translatorische Bewegung in ihrer Längsrichtung (Z) eine gemeinsame Anpresskraft ausüben können, wobei die Anpresskraft sowohl nur vom ersten als auch gleichzeitig vom ersten und vom zweiten Pneumatikelement aufgebracht werden kann, wobei die Pneumatikelemente (110, 210, 310a, 310b, 120, 220, 320a, 320b) so ausgestaltet sind, dass sie getrennt voneinander steuerbar sind, wobei das erste Pneumatikelement (110, 210, 310a, 310b) eine erste Steuereinrichtung umfasst und das zweite Pneumatikelement eine zweite Steuereinrichtung umfasst, welche jeweils separat ansteuerbar sind.

2. Gitterschweissanlage gemäss Anspruch 1, wobei mindestens eine erste oder eine zweite Kolbenstange (112, 212.1, 212.2, 122, 222.1, 222.2) eine Kontaktstelle (106, 206.1 206.2) zur Herstellung einer Kontaktverbindung aufweist, welche ausgelegt ist um die mindestens eine erste Kolbenstange (112, 212.1, 212.2,) in Wirkverbindung mit einer zweiten Kolbenstange (122, 222.1, 222.2) zu bringen, insbesondere wobei die Kontaktstelle (106, 206.1 206.2) aus Messing ist.

3. Gitterschweissanlage (1) gemäss einem der Ansprüche 1 bis 2, wobei die erste(n) und zweite(n) Kolbenstange(n) (112, 212.1, 212.2, 122, 222.1, 222.2) in Serie angeordnet sind.

4. Gitterschweissanlage (1) gemäss einem der Ansprüche 1 bis 3, wobei das Werkzeug eine Elektrode (101, 301) ist, welche insbesondere bezüglich einer translatorischen Bewegung in ihrer Längsachse (Z) mit der (den) ersten Kolbenstange(n) (112, 212.1, 212.2, 122, 222.1, 222.2) wirkverbunden ist.

5. Gitterschweissanlage (1) gemäss einem der Ansprüche 1 bis 4, wobei das zweite Pneumatikelement (120, 220, 320a, 320b) ein Rückhaltemittel (108, 208.1, 208.2) aufweist, welches ausgestaltet ist, eine Rückstellkraft auf die zweite(n) Kolbenstange(n) (122, 222.1, 222.2) auszuüben, insbesondere wobei das zweite Pneumatikelement (120, 220, 320a, 320b) mindestens eine Rückstellfeder umfasst, welche so ausgestaltet ist, dass sie auf die zweite(n) Kolbenstange(n) (122, 222.1, 222.2) eine Rückstellkraft ausübt, welche translatorisch zur Längsachse (Z) der zweite(n) Kolbenstange(n) (122, 222.1, 222.2) wirkt.

6. Gitterschweissanlage (1) gemäss einem der Ansprüche 1 bis 5, wobei das erste und das zweite Pneumatikelement (110, 210, 310a, 310b, 120, 220, 320a, 320b) zum schnellen Aufbau der Anpresskraft jeweils wenigstens ein Vorschubventil (6, 7) umfassen, welches die Betätigung der ersten respektive der zweiten Kolbenstange(n) (112, 212.1, 212.2, 122, 222.1, 222.2) in Längsrichtung (Z) in Richtung der Anpresskraft ermöglicht.

7. Gitterschweissanlage (1) gemäss einem der Ansprüche 1 bis 6, wobei das erste Pneumatikelement (110, 210, 310a, 310b) wenigstens ein Rückzugventil umfasst (8), dass eine Betätigung der ersten Kolbenstange(n) (112, 212.1, 212.2,) in Längsrichtung (Z) in eine der Anpresskraft entgegengesetzten Richtung ermöglicht.

8. Gitterschweissanlage (1) gemäss einem der Ansprüche 6 bis 7, umfassend ein Steuermodul (2) welches so ausgestattet ist, dass es die Steuereinrichtungen der Pneumatikelemente getrennt anzusteuern vermag und das Vorschub- und das Rückzugventil (6, 8) des ersten Pneumatikelements (110, 210, 310a, 310b) mit den Vorschubventil (7) des zweiten Pneumatikelements (120, 220, 320a, 320b) zu synchronisieren vermag.

9. Gitterschweissanlage (1) gemäss einem der Ansprüche 1 bis 8, umfassend eine Mehrzahl paralleler Anordnungen mit je dem ersten und dem zweiten Pneumatikelement (110, 210, 310a, 310b, 120, 220, 320a, 320b).

10. Verfahren zum Schweissen von Gitterstäben, das Verfahren umfassend die Schritte:
a) Bereitstellen einer Gitterschweissanlage (1) gemäss Anspruch 1;
b) Zuführen und Positionieren von zu verschweissenden Stäben (103, 175, 303, 375) in einen Werkzeugbereich der Gitterschweissanlage (1);
c) Aktivieren des ersten Pneumatikelements (110, 210, 310a, 310b) zur Zuführung des Werkzeugs (101, 301) in den Werkzeugbereich mit einer ersten Anpresskraft F₁ und Auslösen eines Schweissstroms, insbesondere eines Wechselstroms, und,
d) eventuell aktivieren des zweiten Pneumatikelements (120, 220, 320a, 320b) zur Addition einer zweiten Anpresskraft F₂ an die erste Anpresskraft F₁.

11. Verfahren gemäss Anspruch 10, wobei die Schritte c) und d) synchronisiert werden.

12. Verfahren gemäss einem der Ansprüche 10 oder 11, wobei die Summe der Anpresskräfte eingestellt wird abhängig von Durchmesser und/oder Material der zu verschweissenden Stäbe (103, 175, 303, 375), insbesondere dergestalt, dass ein allfälliges plastisches Verformen durch ein Einwirken der Anpresskräfte auf die Stäbe (103, 175, 303, 375) im Wesentlichen verhindert wird.

13. Verfahren gemäss einem der Ansprüche 10 bis 12, wobei der Schweissstrom über einen Zeitraum X aufrechterhalten wird und die Anpresskraft F₁ und/oder F₂ über diesen Zeitraum erhöht wird.

## Claims

1. Mesh welding plant (1) comprising a pressing apparatus (100, 200, 300a, 300b) for at least one tool (101, 301) of the mesh welding plant (1), the pressing apparatus (100, 200, 300a, 300b) comprising:
a) a first pneumatic element (110, 210, 310a, 310b) having at least one first piston rod (112, 212.1, 212.2) which is configured such that it can be operatively connected to one of the tools (101, 301) of the mesh welding plant (1);
**characterized in that** the pressing apparatus also comprises:
b) a second pneumatic element (120, 220, 320a, 320b) having at least one second piston rod (122, 222.1, 222.2) which is configured such that it can be operatively connected to the first pneumatic element (110, 210, 310a, 310b), in particular to the first piston rod (112, 212.1, 212.2), and wherein
the first and the second pneumatic element (110, 210, 310a, 310b, 120, 220, 320a, 320b) are arranged such that the first and second piston rod(s) (112, 212.1, 212.2, 122, 222.1, 222.2) can exert a common pressing force by way of a movement in translation in their longitudinal direction (Z), wherein the pressing force can be applied both only by the first and simultaneously by the first and the second pneumatic element, wherein the pneumatic elements (110, 210, 310a, 310b, 120, 220, 320a, 320b) are configured such that they are controllable separately from one another, wherein the first pneumatic element (110, 210, 310a, 310b) comprises a first control device and the second pneumatic element comprises a second control device, which are each separately controllable.

2. Mesh welding plant according to Claim 1, wherein at least one first or one second piston rod (112, 212.1, 212.2, 122, 222.1, 222.2) has a contact point (106, 206.1, 206.2) for producing a contact connection, which is designed to operatively connect the at least one first piston rod (112, 212.1, 212.2) to a second piston rod (122, 222.1, 222.2), in particular wherein the contact point (106, 206.1, 206.2) is made of brass.

3. Mesh welding plant (1) according to either of Claims 1 and 2, wherein the first and second piston rod(s) (112, 212.1, 212.2, 122, 222.1, 222.2) are arranged in series.

4. Mesh welding plant (1) according to one of Claims 1 to 3, wherein the tool is an electrode (101, 301) which is operatively connected to the first piston rod(s) (112, 212.1, 212.2, 122, 222.1, 222.2) in particular with regard to a movement in translation along its longitudinal axis (Z).

5. Mesh welding plant (1) according to one of Claims 1 to 4, wherein the second pneumatic element (120, 220, 320a, 320b) has a restraining means (108, 208.1, 208.2) which is configured to exert a restoring force on the second piston rod(s) (122, 222.1, 222.2), in particular wherein the second pneumatic element (120, 220, 320a, 320b) comprises at least one restoring spring which is configured such that it exerts on the second piston rod(s) (122, 222.1, 222.2) a restoring force that acts in translation with respect to the longitudinal axis (Z) of the second piston rod(s) (122, 222.1, 222.2).

6. Mesh welding plant (1) according to one of Claims 1 to 5, wherein the first and the second pneumatic element (110, 210, 310a, 310b, 120, 220, 320a, 320b), for rapidly building up the pressing force, each comprise at least one feed valve (6, 7) which allows the actuation of the first and second piston rod(s) (112, 212.1, 212.2, 122, 222.1, 222.2), respectively, in the longitudinal direction (Z) in the direction of the pressing force.

7. Mesh welding plant (1) according to one of Claims 1 to 6, wherein the first pneumatic element (110, 210, 310a, 310b) comprises at least one drawback valve (8) which allows actuation of the first piston rod(s) (112, 212.1, 212.2) in the longitudinal direction (Z) in an opposite direction to the pressing force.

8. Mesh welding plant (1) according to either of Claims 6 and 7, comprising a control module (2) which is equipped such that it is capable of controlling the control devices of the pneumatic elements separately and is capable of synchronizing the feed valve (6) and the drawback valve (8) of the first pneumatic element (110, 210, 310a, 310b) with the feed valve (7) of the second pneumatic element (120, 220, 320a, 320b) .

9. Mesh welding plant (1) according to one of Claims 1 to 8, comprising a plurality of parallel arrangements each with the first and the second pneumatic element (110, 210, 310a, 310b, 120, 220, 320a, 320b).

10. Method for welding mesh bars, the method comprising the steps of:
a) providing a mesh welding plant (1) according to Claim 1;
b) feeding and positioning bars (103, 175, 303, 375) to be welded in a tool region of the mesh welding plant (1);
c) activating the first pneumatic element (110, 210, 310a, 310b) to feed the tool (101, 301) into the tool region with a first pressing force F₁ and initiating a welding current, in particular an alternating current; and
d) optionally activating the second pneumatic element (120, 220, 320a, 320b) to add a second pressing force F₂ to the first pressing force F₁.

11. Method according to Claim 10, wherein steps c) and d) are synchronized.

12. Method according to either of Claims 10 and 11, wherein the sum of the pressing forces is set depending on the diameter and/or material of the bars (103, 175, 303, 375) to be welded, in particular such that any plastic deformation is substantially prevented by the pressing forces acting on the bars (103, 175, 303, 375).

13. Method according to one of Claims 10 to 12, wherein the welding current is maintained for a period of time X and the pressing force F₁ and/or F₂ is increased over this period of time.

## Revendications

1. Installation de soudage de treillis (1) comportant un dispositif de pressage (100, 200, 300a, 300b) pour au moins un outil (101, 301) de l'installation de soudage de treillis (1), le dispositif de pressage (100, 200, 300a, 300b) comportant :
a) un premier élément pneumatique (110, 210, 310a, 310b) doté d'au moins une première tige de piston (112, 212.1, 212.2), laquelle est configurée de telle sorte qu'elle peut être amenée en liaison fonctionnelle avec l'un des outils (101, 301) de l'installation de soudage de treillis (1) ;
**caractérisée en ce que** le dispositif de pressage comporte en outre :
b) un deuxième élément pneumatique (120, 220, 320a, 320b) doté d'au moins une deuxième tige de piston (122, 222.1, 222.2), laquelle est configurée de telle sorte qu'elle peut être amenée en liaison fonctionnelle avec le premier élément pneumatique (110, 210, 310a, 310b), en particulier avec la première tige de piston (112, 212.1, 212.2), et
le premier et le deuxième élément pneumatique (110, 210, 310a, 310b, 120, 220, 320a, 320b) étant disposés de telle sorte que les première(s) et deuxième(s) tiges de piston (112, 212.1, 212.2, 122, 222.1, 222.2) peuvent exercer une force de pressage commune par un mouvement de translation dans leur direction longitudinale (Z), la force de pressage pouvant être appliquée à la fois seulement par le premier élément pneumatique et simultanément par le premier et le deuxième élément pneumatique, les éléments pneumatiques (110, 210, 310a, 310b, 120, 220, 320a, 320b) étant configurés de telle sorte qu'ils peuvent être commandés séparément les uns des autres, le premier élément pneumatique (110, 210, 310a, 310b) comportant un premier dispositif de commande et le deuxième élément pneumatique comportant un deuxième dispositif de commande, lesquels peuvent être commandés respectivement séparément.

2. Installation de soudage de treillis selon la revendication 1, dans laquelle au moins une première ou une deuxième tige de piston (112, 212.1, 212.2, 122, 222.1, 222.2) comprend un point de contact (106, 206.1, 206.2) pour la réalisation d'une liaison de contact, laquelle est conçue pour amener l'au moins une première tige de piston (112, 212.1, 212.2) en liaison fonctionnelle avec une deuxième tige de piston (122, 222.1, 222.2), en particulier dans laquelle le point de contact (106, 206.1, 206.2) est constitué de laiton.

3. Installation de soudage de treillis (1) selon l'une des revendications 1 et 2, dans laquelle les première(s) et deuxième(s) tiges de piston (112, 212.1, 212.2, 122, 222.1, 222.2) sont disposées en série.

4. Installation de soudage de treillis (1) selon l'une des revendications 1 à 3, dans laquelle l'outil est une électrode (101, 301), laquelle est reliée fonctionnellement à la première/aux premières tige(s) de piston (112, 212.1, 212.2, 122, 222.1, 222.2) en particulier par rapport à un mouvement de translation le long de son axe longitudinal (Z).

5. Installation de soudage de treillis (1) selon l'une des revendications 1 à 4, dans laquelle le deuxième élément pneumatique (120, 220, 320a, 320b) comprend un moyen de retenue (108, 208.1, 208.2), lequel est configuré pour exercer une force de rappel sur la/les deuxième(s) tige(s) de piston (122, 222.1, 222.2), en particulier dans laquelle le deuxième élément pneumatique (120, 220, 320a, 320b) comporte au moins un ressort de rappel, lequel est configuré de telle sorte qu'il exerce une force de rappel sur la/les deuxième(s) tige(s) de piston (122, 222.1, 222.2), laquelle force de rappel agit en translation par rapport à l'axe longitudinal (Z) de la/des deuxième(s) tige(s) de piston (122, 222.1, 222.2).

6. Installation de soudage de treillis (1) selon l'une des revendications 1 à 5, dans laquelle le premier et le deuxième élément pneumatique (110, 210, 310a, 310b, 120, 220, 320a, 320b) comportent respectivement au moins une soupape d'avance (6, 7) pour l'établissement rapide de la force de pressage, laquelle soupape permet l'actionnement de la première tige respective parmi les deuxièmes tiges de piston (112, 212.1, 212.2, 122, 222.1, 222.2) dans la direction longitudinale (Z) dans le sens de la force de pressage.

7. Installation de soudage de treillis (1) selon l'une des revendications 1 à 6, dans laquelle le premier élément pneumatique (110, 210, 310a, 310b) comporte au moins une soupape de retrait (8), laquelle soupape permet un actionnement de la/des première(s) tige(s) de piston (112, 212.1, 212.2) dans la direction longitudinale (Z) dans un sens opposé à la force de pressage.

8. Installation de soudage de treillis (1) selon l'une des revendications 6 et 7, comportant un module de commande (2), lequel est équipé de telle sorte qu'il est apte à commander séparément les dispositifs de commande des éléments pneumatiques et qu'il est apte à synchroniser la soupape d'avance et la soupape de retrait (6, 8) du premier élément pneumatique (110, 210, 310a, 310b) avec la soupape d'avance (7) du deuxième élément pneumatique (120, 220, 320a, 320b).

9. Installation de soudage de treillis (1) selon l'une des revendications 1 à 8, comportant une pluralité d'agencements parallèles avec respectivement le premier et le deuxième élément pneumatique (110, 210, 310a, 310b, 120, 220, 320a, 320b).

10. Procédé de soudage de barres de treillis, le procédé comportant les étapes :
a) fourniture d'une installation de soudage de treillis (1) selon la revendication 1 ;
b) acheminement et positionnement de barres à souder (103, 175, 303, 375) dans une zone d'outil de l'installation de soudage de treillis (1) ;
c) activation du premier élément pneumatique (110, 210, 310a, 310b) pour l'acheminement de l'outil (101, 301) dans la zone d'outil avec une première force de pressage F₁ et activation d'un courant de soudage, en particulier d'un courant alternatif, et
d) éventuellement activation du deuxième élément pneumatique (120, 220, 320a, 320b) pour l'ajout d'une deuxième force de pressage F₂ à la première force de pressage F₁.

11. Procédé selon la revendication 10, dans lequel les étapes c) et d) sont synchronisées.

12. Procédé selon l'une des revendications 10 ou 11, dans lequel la somme des forces de pressage est réglée en fonction du diamètre et/ou du matériau des barres à souder (103, 175, 303, 375), en particulier de telle sorte qu'une déformation plastique éventuelle soit sensiblement empêchée par une action des forces de pressage sur les barres (103, 175, 303, 375).

13. Procédé selon l'une des revendications 10 à 12, dans lequel le courant de soudage est maintenu pendant un laps de temps X et la/les force(s) de pressage F₁ et/ou F₂ est/sont augmentée(s) pendant ce laps de temps.
